# EUROPÄISCHE PATENTSCHRIFT

(11) **EP 2 910 084 B1**
(45) Veröffentlichungstag und Bekanntmachung des Hinweises auf die Patenterteilung: **13.12.2017**
(21) Anmeldenummer: 13774180.7
(22) Anmeldetag: 09.10.2013
(51) Int. Cl.: H05B 7/144, G05F 1/20

(54) **VORRICHTUNG UND VERFAHREN ZUR REDUZIERUNG VON NETZRÜCKWIRKUNGEN BEIM BETRIEB EINES LICHTBOGENOFENS**
DEVICE AND METHOD FOR REDUCING NETWORK REACTIONS WHEN AN ELECTRIC ARC FURNACE IS IN OPERATION
DISPOSITIF ET PROCÉDÉ DE RÉDUCTION DES RÉPERCUSSIONS SUR LE RÉSEAU LORS DU FONCTIONNEMENT D'UN FOUR À ARC ÉLECTRIQUE

(30) Priorität: 16.10.2012 DE 102012109848
(43) Veröffentlichungstag der Anmeldung: 26.08.2015
(73) Patentinhaber: Maschinenfabrik Reinhausen GmbH, 93059 Regensburg (DE)
(72) Erfinder: KRÜGER, Klaus, 83416 Saaldorf-Surheim (DE); DOHNAL, Dieter, 93138 Lappersdorf (DE); VIERECK, Karsten, 93059 Regensburg (DE); BABIZKI, Alexei, 93049 Regensburg (DE)
(86) Internationale Anmeldenummer: PCT/EP2013/071036
(87) Internationale Veröffentlichungsnummer: WO 2014/060258

(56) Entgegenhaltungen:
- WO-A2-02/063927
- WO-A2-2012/104232
- DE-A1-102009 053 169
- DE-C2- 3 512 189
- US-A1- 2011 216 802

## Beschreibung

Die Erfindung betrifft eine Vorrichtung zur Reduzierung von Netzrückwirkungen beim Betrieb eines Lichtbogenofens. Der Lichtbogenofen hat drei Stränge mit jeweils einer Elektrode und einer zugeordneten Außenleitung zur elektrischen Energiezuführung. In jedem Strang sind ein Sensor zur Messung des aktuell fließenden Stroms und ein Sensor zur Messung der aktuell anliegenden Spannung vorgesehen. Eine Steuer- und Regeleinheit berechnet für jeden Strang aus dem Zeitverlauf von Strom und Spannung eine charakteristische elektrische Ist-Größe.

Ferner betrifft die Erfindung Verfahren zur Reduzierung von Netzrückwirkungen beim Betrieb eines Lichtbogenofens.

Die deutsche Patentschrift DE 35 12 189 C1 offenbart ein Verfahren und eine Vorrichtung zur Regelung von Lichtbogenöfen. Dabei soll eine exakte wirtschaftliche und technisch ohne großen Aufwand realisierbare Einstellung der Lichtbogenspannung und der Elektrodenhöhenstandsstellung ermöglicht werden. Das Stellglied Transformatorspannung wird stets von einer Leistungsregelung angesteuert. Der dem Stromregler überlagerte Leistungsregler liefert ebenso die Führungsgröße für den Stromregler. Auf die Elektrodenverstellung wirkt in allen Fällen unmittelbar nur der Stromregler ein. Somit ergibt sich für den verwendeten Stufenschalterantrieb des Transformators entweder die Möglichkeit, die Transformatorspannung direkt über eine Sollwertvorgabe zuzuführen oder über den Stufenschalter mittels des genannten Leistungsreglers einzustellen. Der Hubantrieb wird über einen Spannungsregler betätigt, wobei die betreffende Steuerspannung entweder aus einem Stromregler oder aus einem Verschleißregler oder direkt als vorgegebene Sollgröße geliefert wird.

Die europäische Patentanmeldung EP 2 362 710 A1 offenbart einen Lichtbogenofen und ein Verfahren zum Betrieb eines Lichtbogenofens. Der der wenigstens einen Elektrode zugeordnete Lichtbogen weist eine erste Strahlungsleistung auf, die sich auf Grundlage eines ersten eingestellten Betriebsparametersatzes ergibt. Der Lichtbogenofen wird gemäß einem vorgegebenen Fahrprogramm betrieben, das auf einem erwarteten Prozessverlauf beruht. Es wird überwacht, ob zwischen dem tatsächlichem Prozessverlauf und dem erwarteten Prozessverlauf eine unerwünschte Abweichung vorliegt. Indem bei Vorliegen einer Abweichung eine geänderte zweite Strahlungsleistung vorgegeben wird. Anhand der geänderten zweiten Strahlungsleistung wird ein geänderter zweiter Betriebsparametersatz ermittelt wird. Das Verfahren erlaubt eine möglichst geringe Einschmelzdauer bei einer Schonung der Betriebsmittel, insbesondere der Lichtbogenofenkühlung, zu erzielen.

Die deutsche Offenlegungsschrift DE 35 43 773 A1 beschreibt ein Verfahren zum Betrieb eines Lichtbogenofens, so dass bei stark schwankenden Rohmaterialien ein Einschmelzen dieses Materials mit einem minimalen Wert des bezogenen elektrischen Energieverbrauches möglich ist. Der Ofentransformator ist mit einem Lastschalter versehen und die Ausgangsspannung an der Sekundärseite des Transformators ist somit einstellbar. Die Steuerung erfolgt durch Ändern der Abgriffe des Ofentransformators oder durch Anheben und Absenken der Graphitelektroden mittels einer Elektrodenhubvorrichtung, um die Länge des Lichtbogens zu ändern. Gleichzeitig wird die Stärke des von der Sekundärseite des Ofentransformators zur Lichtbogenelektrode fließenden elektrischen Stromes gemessen. Die internationale Anmeldung WO 02 / 06 39 27 A2 beschreibt ein Leistungssteuerungssystem für einen Wechselstrom betriebenen Lichtbogenofen, das zwischen der Wechselstromquelle und jeder Elektrode jeweils eine festete Reaktanz, eine regelbaren Reaktanz und einen regelbaren Lichtbogentransformator umfasst und diese steuert. Die regelbare Reaktanz besteht aus einer ersten Drossel und einer parallel dazu geschalteten Reihenschaltung aus einer zweiten Drossel und einem gegensinnig geschaltetem Thyristorpaar. Die Reaktanz wird mittels einer Reaktanzsteuerung gesteuert, indem die Thyristoren gezielt den durchfließenden Strom ein- und ausschalten und dabei auf die durch den Einschmelzprozess verursachten Blindleistungs- und Wirkleistungsschwankungen reagieren und kompensieren. Da das Leistungssteuerungssystem nicht in der Lage ist, alle Netzrückwirkungen, darunter harmonische Schwingungen, die auf die Wechselstromquelle einwirken, zu kompensieren, ist an die Wechselstromquelle eine separate Filterbank angeschlossen. Jeder Elektrode sind außerdem ein Stromsensor und ein Spannungssensor zugeordnet. Das Leistungssteuerungssystem regelt die Reaktanz, die Stufenstellung des Lichtbogentransformators und die Höhe der Elektroden. Der Stufenschalter wählt und beschaltet die einzelnen Anzapfung.

Die deutsche Patentanmeldung DE 10 2009 017 196 A1 offenbart einen Stufenschalter mit Halbleiter-Schaltelementen zur unterbrechungslosen Umschaltung zwischen festen Stufenschalterkontakten, die mit Wicklungsanzapfungen eines Stufentransformators elektrisch verbunden sind. Dabei ist jeder der festen Stufenschalterkontakte direkt oder, während der Umschaltung, über die zwischengeschalteten Halbleiter-Schaltelemente mit einer Lastableitung verbindbar. Die Lastableitung weist feste, geteilte Ableitkontaktstücke auf, damit die Halbleiter-Schaltelemente im stationären Betrieb von der Transformatorenwicklung galvanisch getrennt sind. Für Stufenschalter mit Halbleiter-Schaltelementen hingegen ergeben sich verschiedene Nachteile. Durch das dauerhafte Anliegen der Betriebsspannung und die Beanspruchung der Leistungselektronik durch Blitzstoßspannung sind hohe Isolationsabstände erforderlich, was unerwünscht ist.

In der deutschen Patentanmeldung DE 27 42 221 A1 ist ein Verfahren zur Verhinderung von störenden Flicker-Erscheinungen beim Betrieb von Lichtbogenöfen offenbart. Die elektrische Energie wird über einen Transformator mit Stufenschalter-Steuerung zugeführt, wobei der Flicker-Pegel mit Hilfe eines Flicker-Meßgerätes ständig erfasst wird. Die Meßergebnisse werden in einem Auswertegerät zu einem Signal verarbeitet, das mit einem vorgegebenen Sollwert verglichen wird, welcher der zulässigen Flicker-Basis entspricht. Bei Überschreiten des Sollwertes über einen vorgegebenen Zeitabschnitt wird mit Hilfe eines nachgeschalteten Steuergerätes ein Steuerimpuls für ein die Umschaltung des Laststufenschalters auf eine niedrigere Sekundärspannungsstufe ausgegeben. Bei Unterschreiten des unteren Sollwertes wird eine höhere Sekundärspannungsstufe durch das Steuergerät angesteuert.

Wie aus dem Stand der Technik bekannt, sind die elektrischen Elemente für eine Steuerung bzw. Regelung des Lichtbogenofenbetriebs ein Ofentransformator, eine Drosselspule und ein Elektrodentragarmsystem. Die Energiebereitstellung für die Drehstromlichtbogenöfen erfolgt über Ofentransformatoren mit einem integrierten Stufenschalter. Durch die Transformatorstufen kann der entsprechende Energieeintrag eingestellt werden.

Eine unter Last schaltbare Drosselspule, die dem Transformator vorgeschaltet ist, dient zur Regelung der Reaktanz des Stromkreises und ermöglicht dadurch einen Ofenbetrieb mit stabilen Lichtbögen sowie eine Begrenzung des Kurzschlussstroms. In abhängig vom Prozessfortschritt wird die geeignete Stufe sowohl beim Transformator als auch bei der Seriendrossel ausgewählt. Dies kann durch einen manuellen Eingriff vom Ofenbediener, durch eine integrierte Steuerung oder Regelung erfolgen.

Bei der manuellen Steuerung kann ein erfahrener Ofenbediener anhand des Zustandes des Schmelzgutes den Prozesszustand beurteilen. So kann der Ofenzustand und der Einschmelzprozess subjektiv beobachtet werden. Bei kritischen Situationen (z.B. Beschädigung vom Feuerfest) wird die Transformatorstufe angepasst.

Bei der automatischen Steuerung werden die Transformatorstufen und ggf. die Drosselstufen abhängig vom aktuellen Energieeintrag angepasst. Grundsätzlich wird in der Anfangsphase "Bohrphase" eine hohe Induktivität benötigt, um den Lichtbogen möglichst stabil zu halten (OLTC Drossel == höchste Stufe). In der letzten Phase "flüssiges Bad" wird die Seriendrossel ausgeschaltet, um die Blindleistung zu reduzieren.

In der Bohrphase wird eine niedrigere Spannungsstufe (kurze Lichtbogen) gewählt, um die feuerfeste Auskleidung des Ofens (Feuerfest) sowie den Ofendeckel zu schonen. Nachdem der Lichtbogen von der schäumenden Schlacke eingehüllt ist, wird die höchste Spannungsstufe gewählt, um den größten Energieeintrag in die Schmelze zu erreichen. In der letzten Phase wird eine etwas niedrigere Stufenspannung gewählt, dafür wird ein maximal hoher Strom eingestellt, um den hohen Energieeintrag zu gewährleisten.

Die oben erwähnten Vorgaben bilden, insbesondere bei den manuellen und automatischen Steuerungen, den tatsächlichen Prozesszustand nur sehr unzureichend ab. Auch die neuesten Regelungen sind ebenfalls nicht in der Lage auf die schnellen Veränderungen im System mit den geeigneten Zeitkonstanten (z.B. im Millisekundenbereich) zu reagieren.

Hinsichtlich der Stufenschalter in Ofentransformatoren und Drosselspulen werden die hohen Schalthäufigkeiten je nach verschiedensten Schaltstrategien der Kunden als ein technischer Stressfaktor betrachtet. Es ist in erster Linie auf Kontaktabbrand sowie Abnutzung der mechanischen Bauteile in den Stufenschaltern zurückzuführen.

Da die Wartungsarbeit an Stufenschaltern in der Regel einen hohen Aufwand und vor allem kostenintensive Produktionsunterbrechung bedeutet, ist es für die Betreiber durchaus wünschenswert, das Wartungsintervall zu verlängern, um den Wartungsaufwand des Stufenschalters möglichst zu verringern.

Weiterhin entstehen durch die häufigen Schaltvorgänge zusätzliche Netzrückwirkungen, z.B. in Form von "Flickern", die auf eine sehr aufwändige und kostenintensive Weise (z.B. SVC- Anlagen) reduziert werden müssen.

Es ist Aufgabe der Erfindung, eine Vorrichtung zur Reduzierung von Netzrückwirkungen beim Betrieb eines Lichtbogenofens zu schaffen, die kostengünstig ist sowie zuverlässig und mit einer kurzen Reaktionszeit Netzrückwirkungen reduziert oder eliminiert.

Die Aufgabe wird durch eine Vorrichtung zur Reduzierung von Netzrückwirkungen beim Betrieb eines Lichtbogenofens gelöst, die die Merkmale des Anspruchs 1 umfasst.

Eine weitere Aufgabe der Erfindung ist, ein Verfahren zur Reduzierung von Netzrückwirkungen beim Betrieb eines Lichtbogenofens zu schaffen, das kostengünstig ist und zuverlässig und mit einer kurzen Reaktionszeit Netzrückwirkungen eliminiert.

Die Aufgabe wird durch ein Verfahren zur Reduzierung von Netzrückwirkungen beim Betrieb eines Lichtbogenofens gelöst, das die Merkmale des Anspruchs 3 umfasst.

Die erfindungsgemäße Vorrichtung zur Reduzierung von Netzrückwirkungen beim Betrieb eines Lichtbogenofens zeichnet sich dadurch aus, dass ein Halbleiterstufenschalter dem Ofentransformator zugeordnet ist, wobei durch geeignete Auswahl von Stufen einer Primärseite des Ofentransformators ein Sollstrom in jedem Strang mit einer vorgegebenen elektrischen Größe einstellbar ist.

Mit dem Halbleiterstufenschalter kann auf die Soll-Wicklungsanzapfungen durch entsprechende und ermittelte Soll-Stellungen des Halbleiterstufenschalters geschaltet werden.

Das erfindungsgemäße Verfahren zeichnet sich dadurch aus:
- dass eine Strom- und Spannungsmessung für eine jede Außenleitung von einer Sekundärseite eines Ofentransformators in jedem Strang durchgeführt wird;
- dass für jeden Strang eine aktuelle eine aktuelle elektrische Ist-Größe berechnet wird;
- dass für jeden Strang Sollaußenleiterspannungen derart berechnet werden, dass mit einer gegebenen elektrischen Größe ein Sollstrom in jedem Strang eingestellt werden kann;
- dass die drei Wicklungsanzapfungen einer Primärseite des Ofentransformators derart ausgewählt werden, dass die vorgegebenen Außenleiterspannungen weitgehend erreicht werden;;
- dass eine einzustellende Wicklungsanzapfung auf der Primärseite des Ofentransformators entsprechend der geforderten Soll-Außenleiterspannung gewählt werden; und
- dass eine Leistungsregelung des Ofentransformators auf die einzustellenden Wicklungsanzapfungen der Primärseite mit einem Halbleiterstufenschalter für alle Stränge des Lichtbogenofens getrennt erfolgt, wobei der Halbleiterstufenschalter auf die entsprechende Soll-Stellung schaltet.

Aus einer Differenz zwischen einer aktuellen Wicklungsanzapfung auf der Primärseite des Ofentransformators und dem Unterschied der Wicklungsanzapfungen der Primärseite des Ofentransformators ergibt sich die einzustellende Wicklungsanzapfung.

Die Vorgabe eines übergeordneten Prozessführungssystems wird bzgl. einer Mittenlage oder einer Obergrenze der aktuellen Wicklungsanzapfung der Transformatorstufe berücksichtigt.

Eine Taktzeit zur Einstellung der Wicklungsanzapfungen mit dem Halbleiterstufenschalters auf der Primärseite des Ofentransformators im Bereich von 10 ms liegt.

Die elektrische Ist-Größe ist z.B. eine Impedanz oder eine Admittanz.

Während des Betriebes eines Lichtbogenofens entstehen verschiedene Netzrückwirkungen. Die wesentlichen Elemente der Netzrückwirkungen sind die sogenannten Flicker. Mit der Hilfe eines schnellen Halbleiterstufenschalters (oder Solid-State Stufenschalters) ist es möglich auf die während des Prozesses auftretenden schnellen Spannungsschwankungen sofort zu reagieren und somit eine deutliche Reduzierung des Flicker zu erreichen. Zusätzliche Schaltungen und/oder Betriebsmittel, die hohe Kosten der Flickerreduzierung beim Betrieb eines Lichtbogenofens verursachen, können durch die Verwendung eines Halbleiterstufenschalters vermieden werden.

Diese und andere Merkmale und Vorteile der verschiedenen hier offenbarten Ausführungsformen werden mit Bezug auf die folgende Beschreibung und die Zeichnungen besser verständlich, wobei gleiche Bezugszeichen durchweg gleiche Elemente bezeichnen. Es zeigen:
Figur 1 eine schematische Darstellung eines Systems mit zur Schmelzen von Metall mittels eines Lichtbogenofens;
Figur 2 eine schematische Darstellung der Einbindung der Regelung eines Lichtbogenofens in der Anfangsphase des Schmelzprozesses in die Gesamtregelung des Lichtbogenofens; und
Figur 3 eine schematische Ansicht des Ablaufdiagramms der Regelung eines Lichtbogenofens, um Netzrückwirkungen beim Betrieb eines Lichtbogenofens zu reduzieren.

Obwohl sich die nachfolgende Beschreibung der Erfindung bei der elektrischen Größe auf die Impedanz bezieht, soll dies nicht als Beschränkung der Erfindung aufgefasst werden.

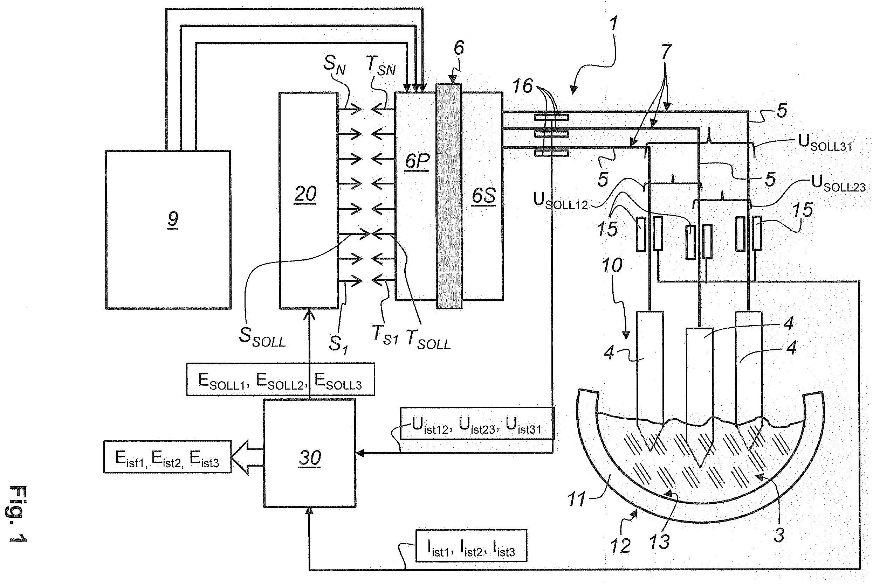

Figur 1 zeigt eine schematische Darstellung eines Systems 1 zum Schmelzen von Metall mittels eines Lichtbogenofens 10. Der Lichtbogenofens 10 besteht aus einem Ofengefäß 11, in dem Stahlschrott eingeschmolzen und eine Schmelze 3 erzeugt wird. Das Ofengefäß 11 kann noch mit einem Deckel (nicht dargestellt) versehen werden. Wandung 12 und Deckel sich mit einer Wasserkühlung versehen. Je nach Betriebsart des Lichtbogenofens 10 hat dieser eine oder drei Elektroden 4. Bei einem Drehstrom-Lichtbogenofen10 werden drei Elektrode 4 verwendet. Die nachfolgende Beschreibung schildert das Prinzip der Erfindung am Beispiel eines Drehstrom-Lichtbogenofens. Ein Feuerfestmatial (nicht dargestellt) kleidet eine Innenwandung 13 des Lichtbogenofens 10 aus.

Die Elektroden 4 sind an einem Haltearm (nicht dargestellt) angebracht und können bei Bedarf in das Ofengefäß 11 eingefahren werden. Jede der Elektroden 4 ist mit einer Außenleitung 5 ausgestattet, die alle mit einer Sekundärseite 6S eines Ofentransformators 6 verbunden sind. Die Außenleitung 5, die Elektrode 4 und der Lichtbogen bilden somit eine Phase bzw. einen Strang 7 des Drehstromkreises. Eine Primärseite 6P des Ofentransformators 6 wird aus einem Energieversorgungsnetz 9 mit der erforderlichen Hochspannung versorgt. Mit der Primärseite 6P des Ofentransformators 6 ist ein Laststufenschalter 20 verbunden, der als Halbleiterstufenschalter ausgebildet ist.

Eine Steuer- und Regeleinheit 30 wirkt mit dem Halbleiterstufenschalter 20 zusammen, um Wicklungsanzapfungen T_{S1},...,T_{SN} des Ofentransformators 6 auf der Primärseite 6P derart zu schalten, dass entsprechende Außenleiterspannungen Uᵢₛₜ₁₂, Uᵢₛₜ₂₃ und Uᵢₛₜ₃₁ vorliegen, so dass Stränge 7 mit einem entsprechenden Sollstrom I_{S1}, I_{S2} und I_{S3} versorgt werden. Als Ergebnis wird eine vorbestimmte Impedanz Z_{SOLL1}, Z_{SOLL2} und Z_{SOLL3} in den Strängen 7 vorherrschen. Die Primärseite 6P des Ofentransformators 6 hat mehrere Wicklungsanzapfungen T_{S1},...,T_{SN} die von den Halbleiterschaltelementen S₁,..., S_{N} des Halbleiterstufenschalters 20 beschaltet werden. Die Steuer- und Regeleinheit 30 erhält Input von Stromsensoren 15 und Spannungssensoren 16, die den Strängen 7 des Lichtbogenofens10 zugeordnet sind. Aus den Eingangsdaten ermittelt die Steuer- und Regeleinheit 30 den Schaltablauf des Halbleiterstufenschalters 20, so dass dieser auf die entsprechende Soll-Stellung S_{SOLL1}, S_{SOLL2} und S_{SOLL3} schaltet und somit die Beschaltung der einzustellenden Wicklungsanzapfung T_{SOLL1}, T_{SOLL2}, und T_{SOLL3} auf der Primärseite 6P des Ofentransformators bewirkt, so dass der Strom in den Strängen 7 bzw. in einem spezifischen Strang 7 eingestellt wird.

In der Anfangsphase des Schmelzprozesses im Lichtbogenofen 10 treten starke Strom- bzw. Spannungsschwankungen auf. Die Stromschwankungen können deutlich mit Hilfe des erfindungsgemäßen und schnellen Halbleiterstufenschalters 10 reduziert werden.

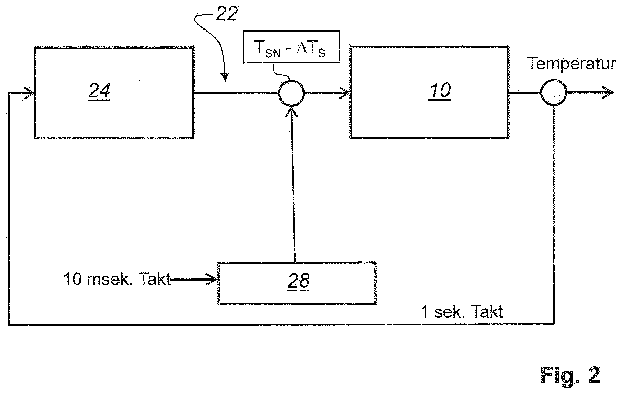

Figur 2 zeigt eine schematische Darstellung der Einbindung einer Regelung eines Lichtbogenofens 10 in der Anfangsphase eines Schmelzprozesses in die Gesamtregelung 22 des Lichtbogenofens 10. Die Gesamtregelung des Lichtbogenofens 10 wird letztendlich über den Halbleiterstufenschalter 20 realisiert. Ein übergeordnetes Prozessführungssystem 24 arbeitet mit einer Taktfrequenz im Bereich von 1 Sekunde. Die Flicker-Regelung 28 arbeitet mit einer Taktfrequenz im Bereich von 10 Millisekunden. Die Taktfrequenz entspricht für jede der Regelungen der Widerholrate der entsprechenden Regelungen. Als Ergebnis der Messungen kann dann mittels des Halbleiterstufenschalters 20 von auf diejenige Wicklungsanzapfung T_{S1}...T_{SN} an einer Primärseite 6P des Ofentransformators 6 umgeschaltet werden, damit die erforderliche Regelung des Lichtbogenofens 10 derart erfolgt, dass Stromschwankungen minimiert werden.

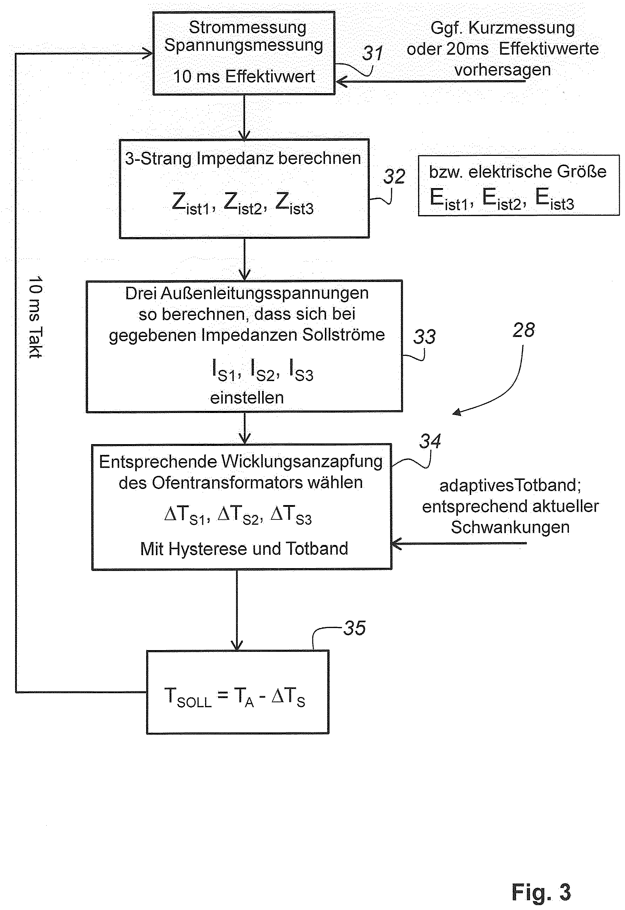

In Figur 3 ist eine schematische Ansicht eines Ablaufdiagramms der Regelung eines Lichtbogenofens 10, um Netzrückwirkungen beim Betrieb des Lichtbogenofens 10 zu vermeiden bzw. zu reduzieren. Im ersten Schritt 31 wird eine Strom- und Spannungsmessung für eine jede Außenleitung 5, die von einer Sekundärseite 6S des Ofentransformators 6 zu den Elektroden 4 führt. Die Strom- und Spannungsmessung wird somit in jedem Strang 7 durchgeführt.

In einem zweiten Schritt 32 wird für jeden Strang 7 eine aktuelle Impedanz Zᵢₛₜ₁, Zᵢₛₜ₂, uns Zᵢₛₜ₃ berechnet. In einem nachgeschalteten Schritt 33 werden drei Außenleiterspannung Uᵢₛₜ₁₂, Uᵢₛₜ₂₃, und Uᵢₛₜ₃₁ derart berechnet, dass mit gegebenen Ist-Impedanzen Zᵢₛₜ₁, Zᵢₛₜ₂, Zᵢₛₜ₃ ein Sollstrom I_{S1}, I_{S2}, I_{S3} in jedem Strang 7 eingestellt werden kann. Gemäß eines vierten Schritts 34 wird für jeden Strang 7 ein Unterschied in den Wicklungsanzapfungen ΔT_{S1},ΔT_{S2}, und ΔT_{S3} einer Primärseite 6P des Ofentransformators 6 derart ausgewählt wird, dass Schwankungen der gemessenen Ströme und Spannungen nur außerhalb einer definierten Schwankungsbreite berücksichtigt werden. In einem letzten Schritt 35 ergibt sich daraus für jeden Strang 7 eine einzustellende Wicklungsanzapfung T_{SOLL1}, T_{SOLL2}, T_{SOLL3} auf der Primärseite 6P des Ofentransformators 6. Die einzustellende Wicklungsanzapfung T_{SOLL1}, T_{SOLL2}, T_{SOLL3} errechnet sich aus einer Differenz zwischen einer aktuellen Stufe T_{A1}, T_{A2}, und T_{A3} auf der Primärseite 6P des Ofentransformators 6 und dem Unterschied der Wicklungsanzapfungen ΔT_{S1}, ΔT_{S2}, und ΔT_{S3} auf der Primärseite 6P des Ofentransformators 6, um in jedem Stang eine Reduzierung des Flickers herbeizuführen. Der Halbleiterstufenschalter 20 ermöglicht eine schnelle Einstellung der benötigten Wicklungsanzapfung T_{SOLL1}, T_{SOLL2} oder T_{SOLL3} und dies über mehrere Wicklungsanzapfungen hinweg. Ferner ist es mit dem Halbleiterstufenschalter 20 möglich, dass die Umstellung der einzustellenden Wicklungsanzapfungen T_{SOLL1,} T_{SOLL2} oder T_{SOLL3} auf der Primärseite 6P des Ofentransformators 6.

Nur mit der erfindungsgemäßen Verwendung des Halbleiterstufenschalters 20 ist es möglich eine Taktzeit für die Einstellung der erforderlichen Wicklungsanzapfung T_{SOLL1}, T_{SOLL2}, und T_{SOLL3} auf der Primärseite 6P des Ofentransformators 8 im Bereich von 10 ms zu erzielen.

Die Erfindung wurde in Bezug auf zwei Ausführungsformen beschrieben. Es ist jedoch für einen Fachmann selbstverständlich, dass Änderungen und Abwandlungen der Erfindung gemacht werden können, ohne dabei den Schutzbereich der nachstehenden Ansprüche zu verlassen.

### Bezugszeichenliste

- Nr.: Bezeichnung
- 1: System
- 3: Schmelze
- 4: Elektrode
- 5: Außenleitung
- 6: Ofentransformator
- 6P: Primärseite
- 6S: Sekundärseite
- 7: Strang, Phase
- 9: Energieversorgungsnetz
- 10: Lichtbogenofen
- 11: Ofengefäß
- 12: Außenwandung
- 13: Innenwandung
- 15: Stromsensor
- 16: Spannungssensor
- 20: Laststufenschalter,
Halbleiterstufenschalter
- 22: Gesamtregelung
- 24: Thermisch basierte Leistungsregelung
- 28: Flicker-Regelung
- 30: Steuer- und Regeleinheit
- 31: erster Schritt
- 32: zweiter Schritt
- 33: dritter Schritt
- 34: Tiefpassfilterung
- 35: Vergleichsschritt
- 36: letzter Schritt
- Eᵢₛₜ₁, Eᵢₛₜ₂, Eᵢₛₜ₃: elektrische Ist-Größe
- E_{SOLL1}, E_{SOLL2}, E_{SOLL3}: gegebene elektrischen Größe
- Iᵢₛₜ₁, Iᵢₛₜ₂, Iᵢₛₜ₃: gemessenen Strom
- I_{S1}, I_{S2}, I_{S3}: Sollstrom
- T_{S1}...T_{SN}: Wicklungsanzapfung, Transformatorstufe
- T_{A1}, T_{A2}, T_{A3}: aktuelle Wicklungsanzapfung
- T_{SOLL1}, T_{SOLL2}, T_{SOLL3}: einzustellende Wicklungsanzapfung
- ΔT_{S1}, ΔT_{S2}, ΔT_{S3}: Unterschied der Wicklungsanzapfungen
- S₁...S_{N}: Halbleiterschaltelement
- S_{SOLL1}, S_{SOLL2}, S_{SOLL3}: Soll-Stellung
- Uᵢₛₜ₁₂, Uᵢₛₜ₂₃, Uᵢₛₜ₃₁: Außenleiterspannung
- U_{SOLL12}, U_{SOLL23}, U_{SOLL31}: Soll-Außenleiterspannung
- Z_{SOLL1}, Z_{SOLL2} Z_{SOLL3}: vorbestimmte Impedanz
- Zᵢₛₜ: aktuelle Impedanz

## Patentansprüche

1. Vorrichtung zur Reduzierung von Netzrückwirkungen beim Betrieb eines Lichtbogenofens (10), umfassend
- drei Stränge (7) mit jeweils einer Elektrode (4) und einer zugeordneten Außenleitung (5) zur elektrischen Energiezuführung,
- in jedem Strang (7) einen Sensor (15) zur Messung des aktuell fließenden Stroms und einen Sensor (16) zur Messung der aktuell anliegenden Spannung;
- eine Steuer- und Regeleinheit (30), mit der aus dem gemessenen Strom (list1, list2, list3) und der aktuell anliegenden Strangspannung für jeden Strang (7) eine elektrische Ist-Größe (Eist1, Eist2, Eist3) und daraus eine geeignete Außenleiterspannung (USOLL12, USOLL23, USOLL31) berechenbar ist,
**dadurch gekennzeichnet, dass**
- ein Halbleiterstufenschalter (20) dem Ofentransformator (6) zugeordnet ist, dass durch geeignete Auswahl dreier Soll-Wicklungsanzapfung (TSOLL1, TSOLL2, TSOLL3) einer Primärseite (P) des Ofentransformators (6) ein Sollstrom (IS1, IS2, IS3) in jedem Strang (7) mit einer gegebenen elektrischen Größe (ESOLL1, ESOLL2, ESOLL3) einstellbar ist.

2. Vorrichtung nach Anspruch 1, wobei mit dem Halbleiterstufenschalter (20) auf die Soll-Wicklungsanzapfungen (TSOLL1, TSOLL2, TSOLL3) durch entsprechende Soll-Stellungen (SSOLL1, SSOLL2, SSOLL3) schaltbar ist.

3. Verfahren zur Reduzierung von Netzrückwirkungen beim Betrieb eines Lichtbogenofens (10), umfassend die folgenden Schritte, dass
- eine Strom- und Spannungsmessung für eine jede Außenleitung (5) von einer Sekundärseite (6S) eines Ofentransformators (6) in jedem Strang (7) durchgeführt wird;
- für jeden Strang (7) eine aktuelle elektrische Ist-Größe (Eist1, Eist2, Eist3) berechnet wird;
- für jeden Strang (7) eine Soll-Außenleiterspannungen (USOLL12, USOLL23, USOLL31) derart berechnet wird, dass mit einer gegebenen elektrischen Größe (ESOLL1, ESOLL2, ESOLL3) ein Sollstrom (IS1, IS2, IS3) in jedem Strang (7) eingestellt wird;
- eine einzustellende Wicklungsanzapfung (TSOLL1, TSOLL2, TSOLL3) auf der Primärseite (6P) des Ofentransformators (6) entsprechend der geforderten Soll-Außenleiterspannung (USOLL12, USOLL23, USOLL31) gewählt wird;
- eine Leistungsregelung des Ofentransformators (6) auf die einzustellenden Wicklungsanzapfungen (TSOLL1, TSOLL2, TSOLL3) der Primärseite (6P) mit einem Halbleiterstufenschalter (20) für alle Stränge (7) getrennt erfolgt, wobei der Halbleiterstufenschalter (20) auf die entsprechende Soll-Stellung (SSOLL1, SSOLL2, SSOLL3) schaltet.

4. Verfahren nach Anspruch 3, wobei die Taktzeit für das Einstellen der Wicklungsanzapfungen (TSOLL1, TSOLL2, TSOLL3) mit dem Halbleiterstufenschalters (20) auf der Primärseite (6P) im Bereich von 10 ms liegt.

5. Verfahren nach Anspruch 3 oder 4, wobei aus einer Differenz zwischen einer aktuellen Wicklungsanzapfung (TA1,TA2, TA3) auf der Primärseite (6P) und dem Unterschied der Wicklungsanzapfungen (ΔTS1, ΔTS2, ΔTS3) der Primärseite (6P) sich die einzustellende Wicklungsanzapfung (TSOLL1, TSOLL2, TSOLL3) ergibt.

6. Verfahren nach Anspruch 5, wobei mit einem übergeordneten Prozessführungssystem eine Mittenlage oder eine Obergrenze der aktuellen Wicklungsanzapfung (TA1,TA2, TA3) der Transformatorstufe berücksichtigt wird.

7. Verfahren nach einem der vorangehenden Ansprüche, wobei die elektrische Ist-Größe (Eist) eine Impedanz (Z) oder eine Admittanz (Y) ist.

## Claims

1. A device for reducing network feedback during operation of an electric arc furnace (10), the device comprising
- three lines (7), each with one electrode (4) and one assigned phase conductor (5) for supplying electrical energy;
- in each line (7) a sensor (15) for measuring the presently flowing current and a sensor (16) for measuring the presently applied voltage;
- a control and regulating unit (30) by means of which an electrical actual value (Eist1, Eist2, Eist3) and, based thereupon, a suitable phase voltage (USOLL12, USOLL23, USOLL31) is calculable for each line (7) from the measured current (list1, list2, list3) and the presently applied line voltage,
**characterised in that**
- a semiconductor tap changer (20) is assigned to the furnace transformer (6) such that, by the suitable selection of three target winding taps (TSOLL1, TSOLL2, TSOLL3) of a primary side (P) of the furnace transformer (6), and with a given electrical value (ESOLL1, ESOLL2, ESOLL3), a target current (IS1, IS2, IS3) is adjustable in each line (7).

2. The device according to claim 1, wherein it is possible to switch to the target winding taps (TSOLL1, TSOLL2, TSOLL3) with the semiconductor tap changer (20) by means of corresponding target positions (SSOLL1, SSOLL2, SSOLL3).

3. A method for reducing network feedback during operation of an electric arc furnace (10), the method comprising the following steps that
- a current measurement and a voltage measurement are carried out for each of the phase conductors (5) of a secondary side (6S) of a furnace transformer (6) in each line (7);
- a presently active electrical actual value (Eist1, Eist2, Eist3) is calculated for each line (7);
- a target phase voltage (USOLL12, USOLL23, USOLL31) is calculated for each line (7) in such a manner that, with a given electrical value (ESOLL1, ESOLL2, ESOLL3), a target current (IS1, IS2, IS3) can be adjusted for each line (7);
- a winding tap (TSOLL1, TSOLL2, TSOLL3), which is to be adjusted and which is on the primary side (6P) of the furnace transformer (6), is selected corresponding to the required target phase voltage (USOLL12, USOLL23, USOLL31); and
- a power regulation of the furnace transformer (6) to the winding taps (TSOLL1, TSOLL2, TSOLL3) of the primary side (6P), which winding taps are to be adjusted, is carried out by means of a semiconductor tap changer (20) separately for all lines (7), wherein the semiconductor tap changer (20) switches to the appropriate target position (SSOLL1, SSOLL2, SSOLL3).

4. The method according to claim 3, wherein the cycle time for adjusting the winding taps (TSOLL1, TSOLL2, TSOLL3) by means of the semiconductor tap changer (20) on the primary side (6P) is in the range of 10 milliseconds.

5. The method according to claim 3 or 4, wherein the winding tap (TSOLL1, TSOLL2, TSOLL3) to be adjusted results from a difference between a presently active winding tap (TA1, TA2, TA3) on the primary side (6P) and the difference of the winding taps (ΔTS1, ΔTS2, ΔTS3) of the primary side (6P) of the furnace transformer (6).

6. The method according to claim 5, wherein a central position or an upper limit of the presently active winding tap (TA1 ,TA2, TA3) of the transformer stage is taken into account by means of a superordinate process control system.

7. The method according to one of the previous claims, wherein the electrical actual value (Eist) is an impedance (Z) or an admittance (Y).

## Revendications

1. Dispositif pour réduire les réactions du réseau lors du fonctionnement d'un four à arc électrique (10) comprenant :
- trois lignes (7) avec chacune fois une électrode (4) et une ligne extérieure (5) associée pour l'alimentation en énergie électrique,
- à chaque ligne (7) un capteur (15) pour mesurer l'intensité du courant passant actuellement et un capteur (16) pour mesurer la tension appliquée actuellement,
- une unité de commande et de régulation (30) pour calculer à partir de l'intensité mesurée (list1, list2, list3) et la tension de ligne actuellement appliquée à chaque ligne 7, une grandeur électrique réelle (Eist1, Eist2, Eist3), ainsi qu'une tension de ligne extérieure appropriée (USOLL12, USOLL23, USOLL31),
dispositif **caractérisé en ce que**
- un commutateur semi-conducteur (20) est associé au transformateur (6) du four pour régler, par le choix approprié de trois prises d'enroulement de consigne (TSOLL1, TSOLL2, TSOLL3), du côté primaire (P) du transformateur de four (6), une intensité de consigne (IS1, IS2, IS3) dans chaque ligne (7) avec une grandeur électrique donnée (ESOLL1, ESOLL2, ESOLL3).

2. Dispositif selon la revendication 1,
dans lequel avec un changeur de prises semi-conducteur (20) on commute sur les prises d'enroulement de consigne (TSOLL1, TSOLL2, TSOLL3) par des positions de consigne (SSOLL1, SSOLL2, SSOLL3) correspondantes.

3. Procédé pour réduire les réactions du réseau pendant le fonctionnement d'un four à arc électrique (10), comprenant les étapes suivantes consistant à
- effectuer une mesure d'intensité et de tension pour chaque ligne extérieure (5) du côté secondaire (6S) du transformateur de four (6) dans chaque ligne (7),
- calculer pour chaque ligne (7) la grandeur électrique réelle actuelle (Eist1, Eist2, Eist3),
- régler pour chaque ligne (7), une tension de ligne extérieure de consigne (USOLL12, USOLL23, USOLL31) de façon à régler une intensité de consigne (IS1, IS2, IS3) dans chaque ligne (7) avec une grandeur électrique donnée (ESOLL1, ESOLL2, ESOLL3),
- sélectionner une prise d'enroulement à régler (TSOLL1, TSOLL2, TSOLL3) du côté primaire (6P) du transformateur de four (6) en fonction de la tension de consigne de ligne extérieure (USOLL12, USOLL23, USOLL31) choisie,
- la régulation de puissance du transformateur de four (6) sur les prises d'enroulement à régler (TSOLL1, TSOLL2, TSOLL3) du côté primaire (6P) se faisant séparément avec un changeur de prises semi-conducteur (20) pour chacune des lignes (7),
le changeur de prises semi-conducteur (20) commutant sur la position de consigne correspondante (SSOLL1, SSOLL2, SSOLL3).

4. Procédé selon la revendication 3,
selon lequel la cadence du réglage des prises d'enroulement (TSOLL1, TSOLL2, TSOLL3) avec le commutateur de prises semi-conducteur (20) sur le côté primaire (6P) est de l'ordre de 10 ms.

5. Procédé selon la revendication 3 ou 4,
selon lequel à partir de la différence entre une prise d'enroulement actuelle (TA1, TA2, TA3) du côté primaire (6P) et la différence des prises d'enroulement (ΔTS1, ΔTS2, ΔTS3) du côté primaire (6P), on obtient la prise d'enroulement à régler (TSOLL1, TSOLL2, TSOLL3).

6. Procédé selon la revendication 5,
selon lequel avec un système principal de conduite de procédé on tient compte de la position médiane ou de la limite supérieure de la prise d'enroulement actuelle (TA1, TA2, TA3) de l'échelon du transformateur.

7. Procédé selon l'une des revendications précédentes,
selon lequel la grandeur électrique réelle (Eist) est une impédance (Z) ou une admittance (Y).
